# EUROPÄISCHE PATENTSCHRIFT

(11) **EP 3 084 383 B1**
(45) Veröffentlichungstag und Bekanntmachung des Hinweises auf die Patenterteilung: **11.07.2018**
(21) Anmeldenummer: 14815573.2
(22) Anmeldetag: 05.12.2014
(51) Int. Cl.: G01M 3/20

(54) **SCHNÜFFELSONDE**
SNIFFER PROBE
CHERCHE-FUITE

(30) Priorität: 17.12.2013 DE 102013021313
(43) Veröffentlichungstag der Anmeldung: 26.10.2016
(73) Patentinhaber: Brockmann, Robert, 17489 Greifswald (DE)
(72) Erfinder: Brockmann, Robert, 17489 Greifswald (DE)
(74) Vertreter: v. Bezold & Partner Patentanwälte - PartG mbB
(86) Internationale Anmeldenummer: PCT/EP2014/003280
(87) Internationale Veröffentlichungsnummer: WO 2015/090532

(56) Entgegenhaltungen:
- WO-A1-2005/124309
- WO-A1-2010/079055
- WO-A2-2010/017904
- DE-A1-102005 021 909
- DE-A1-102005 022 157
- DE-A1-102006 056 215

## Beschreibung

Die Erfindung betrifft eine Schnüffelsonde einer Lecksuchvorrichtung zur Bestimmung der Gasdichtheit eines Prüflings sowie eine die Schnüffelsonde aufweisende Lecksuchvorrichtung.

Schnüffelsonden sind in der Technik seit Jahren bekannt. Kennzeichen dieser Schnüffelsonden ist die Querempfindlichkeit mit atmosphärischen Gasen, insbesondere mit dem Edelgas Helium, bei der Bestimmung der Gasdichtheit eines Prüflings. Einige dieser Schnüffelsonden werden in der Patentschrift DE 42 30 022 A1 sowie in der Patentschrift DE 10 2004 029 637 A1 beschrieben. Des Weiteren beschreibt die DIN EN 1779 verschiedene Überdruck-Testgasverfahren mit Schnüffelsonden. Bei den Überdruck-Testgasverfahren B4 nach der DIN EN 1779 wird ein mit Testgas beaufschlagter Prüfling mit einer Schnüffelsonde abgeschnüffelt. Dabei wird stetig ein kleiner Volumenstrom über die Schnüffelsonde zum Lecksucher angesaugt. Dringt Testgas aus dem Prüfling, wird dieses über die Schnüffelsonde angesaugt und vom Lecksucher detektiert, dabei wird als Testgas zum Nachweis der Gasdichtheit eines Prüflings vielfach Helium oder Wasserstoff verwendet.

Ferner offenbart die Offenlegungsschrift DE 10 2006 056 215 A1 ein Schnüffellecksuchgerät mit einem Hauptgerät, das eine ein Hochvakuum erzeugende Vakuumpumpvorrichtung und einen Gasdetektor enthält, und einer handgeführten Schnüffelsonde, die über einen flexiblen Schnüffelschlauch und eine lösbare Schlauchkupplung mit einer Gaseingangsleitung des Hauptgeräts verbunden ist, dadurch gekennzeichnet, dass die Gaseingangsleitung einen Flussbegrenzer enthält, der bei gelöster Schlauchkupplung die durch die Gaseingangsleitung fließende Gasströmung begrenzt.

Ein weiteres Lecksuchgerät ist aus der Offenlegungsschrift WO 2005/124309 A1 bekannt. Bei diesem Lecksuchgerät mit Schnüffelsonde ist vorgesehen, dass der als drosselnde Kapillarleitung ausgebildete Schnüffelschlauch, der von der Schnüffelsonde zu einer Vakuumkammer führt, eine in Längsrichtung variierende innere Querschnittsfläche aufweist. Die Querschnittsfläche vergrößert sich in Strömungsrichtung des angesaugten Gases, also vom Einlass zur Vakuumkammer. Dadurch wird die Totzeit, d.h. die Laufzeit des Gases durch den Schnüffelschlauch, verringert.

Aus der Offenlegungsschrift WO 2010/017904 A2 ist ein Verfahren zur Herstellung eines Reingases beschrieben, das wiederum mit einer herkömmlichen Schnüffelsonde arbeitet.

Die seit Jahren in der Technik bekannten Schnüffelsonden besitzen in der Regel eine elastische Leitung aus einem Kunststoff mit einem hydraulischen Widerstand oder eine elastische Kapillare aus einem Elastomer. Kennzeichen dieser Schnüffelsonden ist die Quer-empfindlichkeit mit Gasen aus der Atmosphäre sowie mit nicht-atmosphärischen Gasen, wie zum Beispiel SF6. Der Grund hierfür ist, dass z. B. durch die elastische Schnüffelleitung der Schnüffelsonde sehr leicht atmosphärisches Helium in den Messgasstrom einpenetriert. Des Weiteren können mit diesen Schnüffelsonden Helium-Leckraten von 1,0x10⁻⁰⁷ mbar·l/s erst nach einer Verweilzeit von einer halben Stunde bestimmt werden, da die in der Schnüffelleitung eingelagerte Verunreinigungen, z. B. von Helium, in den Messgasstrom einpenetriert.

Diese Nachteile bewirken, dass die Ermittlung der Dichtheit eines Prüflings in einer Hülle, die mit einem testgasfreien Schutzgas, z. B. mit einem heliumfreien Schutzgas, beaufschlagt ist, durch die beschriebene Querempfindlichkeit gar nicht oder nur mit einer Empfindlichkeit von 1,0x10⁻⁰⁷ mbar·l/s erfolgen kann.

Es ist somit eine Aufgabe der Erfindung, eine verbesserte Schnüffelsonde und eine verbesserte Schnüffelvorrichtung bereitzustellen, mit denen Nachteile herkömmlicher Techniken vermieden werden können. Der vorliegenden Erfindung liegt somit insbesondere die Aufgabe zu Grunde, die Einsatzgrenzen bzw. die Empfindlichkeit durch die Reduzierung der Querempfindlichkeit der Schnüffelsonde mit Gasen in der Atmosphäre, insbesondere mit Wasserstoff oder dem Edelgas Helium, zu erhöhen.

Diese Aufgaben werden durch eine Schnüffelsonde mit den Merkmalen des unabhängigen Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung werden die genannten Aufgaben dadurch gelöst, dass die Schnüffelsonde eine Fremdgasbarriere aufweist, die verhindert, dass Gase aus der Atmosphäre über die Schnüffelleitung in das zum Lecksucher geförderte Messgas einpenetrieren können. Hierbei sind erfindungsgemäß zwei Varianten möglich. Eine erste Variante sieht vor, dass die Schnüffelleitung als elastische Leitung aus Kunststoff ausgeführt ist, in die ein hydraulischer Widerstand eingebracht ist, bevorzugt im Bereich, in dem das Testgas angesaugt wird, wobei zur Ausbildung der Fremdgasbarriere die elastische Leitung von einem Schutzgasschlauch umgeben ist und zwischen dem Schutzgasschlauch und der elastischen Leitung ein von einem testgasfreien Schutzgas durchströmbarer Zwischenraum vorgesehen ist. Eine zweite Variante sieht vor, dass die Schnüffelleitung als elastische Kapillare aus Kunststoff ausgeführt ist, wobei zur Ausbildung der Fremdgasbarriere die elastische Kapillare von einem Schutzgasschlauch umfasst wird und zwischen dem Schutzgasschlauch und der elastischen Kapillare ein von einem testgasfreien Schutzgas durchströmbarer Zwischenraum vorgesehen ist. Insbesondere kann die Fremdgasbarriere so ausgeführt sein, dass die beschriebene Querempfindlichkeit mit Gasen aus der Umgebung durch die Fremdgasbarriere so weit minimiert wird, dass die Gasdichtheit eines Prüflings mit einer Empfindlichkeit zwischen 1,0x10⁻¹⁰ mbar·l/s bis 1,0x10⁻¹¹ mbar·l/s nachgewiesen werden kann. Eine Fremdgasbarriere, die verhindert, dass Gase aus der Atmosphäre über die Schnüffelleitung in das zum Lecksucher geförderte Messgas einpenetrieren können, ist vorzugsweise so ausgeführt, dass die Leckagerate (Leckgasstrom) Q in mbar*l/s der Fremdgasbarriere für das nachzuweisende Testgas höchstens 1x10⁻¹² mbar*l/s beträgt. Dies kann beispielsweise durch Ummantelung einer elastischen Leitung mit einem vom einem Schutzgas durchströmten Schutzgasschlauch erreicht werden, wie vorstehend gemäß der ersten Variante beschrieben.

Je nach Anforderung an die Prüfaufgabe kann die Leckagerate der Fremdgasbarriere für das Testgas jedoch auch größer als 1x10⁻¹² mbar*l/s sein, wobei die Leckagerate jedoch zumindest immer kleiner als die geforderte Nachweisempfindlichkeit der Prüfanordnung sein muss, vorzugsweise um einen Faktor 10 kleiner. Soll z. B. die Leckagerate eines Prüflings mit Nachweisempfindlichkeit größer 1x10⁻⁰⁷ mbar*l/s nachgewiesen werden, so sollte die Leckagerate der Schnüffelsonde für das Testgas kleiner gleich 1x10⁻⁰⁸ mbar*l/s sein.

Alternativ könnte die Fremdgasbarriere durch die Gasdichtheit der Fremdgasbarriere in Beziehung zur Messempfindlichkeit des Lecksuchers spezifiziert werden. Gemäß einer weiteren Variante der Erfindung ist die Fremdgasbarriere so ausgeführt, dass die Testgaskonzentration in der Schnüffelsonde aufgrund von atmosphärischem Testgas die Testgaskonzentration in der Schnüffelsonde maximal um 10% ansteigen lässt. Liegt zum Beispiel die Empfindlichkeit des Lecksuchers bei 1x10⁻¹¹ mbar*l/s so verhindert die Fremdgasbarriere, dass im geförderten Messgasstrom die Leckrate maximal um 1x10⁻¹² mbar*l/s auf 1,1x10⁻¹¹ mbar*l/s aufgrund von atmosphärischen Testgas ansteigt. Bezogen auf den He-Partialdruck bedeutet dies, dass die Messempfindlichkeit des Lecksuchers 10x10⁻⁰⁹ hPa beträgt, und ferner, dass durch atmosphärisches Helium der He-Partialdruck im Messgas um 1x10⁻⁰⁹ hPa ansteigt, so dass der vom Lecksucher angesaugte He-Partialdruck maximal 11x10⁻⁰⁹ hPa beträgt. Weiteres Kennzeichen der Schnüffelsonde ist die technische Gasdichtheit. Dies bedeutet, dass beim Verschließen des die Gaseintrittsöffnung ausbildenden Schnüffelmundes der Schnüffelleitung die Helium-Dichtheit der Schnüffelsonde zwischen 1,0x10⁻¹⁰ mbar·l/s bis 1,0x10⁻¹¹ mbar·l/s beträgt, was einem theoretischen Gasverlust von bis zu 1 cm³ in 3000 Jahren gleichzusetzen ist.

Gemäß einem nicht beanspruchten Beispiel wird eine Schnüffelsonde mit einer Fremdgasbarriere vorgeschlagen, wobei zur Ausbildung der Fremdgasbarriere die Schnüffelleitung der Schnüffelsonde aus einer metallischen Leitung gebildet ist. Vorzugsweise umfasst die Schnüffelleitung einen metallischen Wellschlauch mit einem hydraulischen Widerstand. Die Schnüffelleitung kann auch aus einer metallischen Kapillare gebildet sein. Besonders vorteilhaft ist, wenn die metallische Schnüffelleitung von einem elastischen Kunststoff oder einem Stützgewebe umfasst bzw. umgeben ist.

Vorstehend wurde bereits festgestellt, dass die Schnüffelsonde eine elastische Leitung mit einem hydraulischen Widerstand oder eine elastische Kapillare, z. B. eine Kapillare aus einem Elastomer zur Förderung des Messgases, aufweisen kann. Gemäß diesen Varianten ist zur Ausbildung der Fremdgasbarriere die elastische Leitung oder elastische Kapillare von einem Schutzschlauch umfasst, so dass sich ein Zwischenraum zwischen elastischer Schnüffelleitung und Schutzschlauch ausbildet. Die Fremdgasbarriere bildet dann der Zwischenraum zwischen der elastischen Leitung mit dem hydraulischen Widerstand bzw. der elastischen Kapillare und dem Schutzschlauch aus, der im Betrieb der Schnüffelsonde mit einem testgasfreien Schutzgas über den Saugmund der Schnüffelsonde beaufschlagt wird. Kennzeichen des Schutzgases ist seine Reinheit. Durch die Reinigung eines technischen Gas durch das in der Patentschrift WO 2010/017904 A2 beschriebene Verfahren erlaubt es sogar, ein technisches Gas von Verunreinigungen auf bis zu 10 ppt zu reinigen. Als testgasfrei werden Schutzgase angesehen, deren Verunreinigungen mit Testgas um den Faktor 100 kleiner als in der Atmosphäre sind, vorzugsweise aber ein Schutzgas, das mittels des in der Patentschrift WO 2010/017904 A2 beschriebenen Verfahrens von Verunreinigungen des Testgases gänzlich gereinigt ist. Dieses Verfahren erlaubt unter anderem, Stickstoff auf bis zu 10 ppt von Helium zu reinigen.

Das testgasfreie Schutzgas, vorzugsweise heliumfreier Stickstoff, welches vorzugsweise an einem Schnüffelhandstück der Schnüffelsonde über eine Öffnung in die Umgebung abströmt, bewirkt eine stetige Umspülung der elastischen Schnüffelleitung und verhindert somit, dass Verunreinigungen mit Testgas, z. B. mit dem Testgas Wasserstoff oder dem Testgas Helium, in das geförderte Messgas über den Schutzschlauch und die elastische Schnüffelleitung in das geförderte Messgas einpenetrieren können.

Neben einer manuellen oder geregelten Druckregelung des testgasfreien Volumenstromes, die optimalerweise durch eine elektronische Druckhaltung erfolgt, ermöglicht die Öffnung im Handstück, dass sich ein konstanter Überdruck, vorzugsweise ein Überdruck von 10 hPa, im Schutzgasschlauch einstellt.

Die Schnüffelsonde kann ein 2-Wege-Ventil aufweisen, das z. B. in das Handstück der Schnüffelsonde integriert ist, wobei beim Schließen des 2-Wege-Ventils kein Messgas mehr über die Schnüffelleitung zum Lecksucher strömt. Das erlaubt, den Lecksucher vor Verunreinigungen zu schützen und zudem den Lecksucher im Vorfeld der Messung von Verunreinigungen zu reinigen.

Gemäß einer weiteren bevorzugten Ausführungsform der Erfindung kann an der Schnüffelleitung der Schnüffelsonde ein 3-Wege-Ventil angeordnet sein, das vorzugsweise am Handstück angeordnet ist, wobei beim Schalten des 3-Wege-Ventils anstelle von Messgas testgasfreies Schutzgas über die Schnüffelleitung zum Lecksucher strömt. Das erlaubt, besonders vor Messbeginn, die Schnüffelleitung der Schnüffelsonde sowie den Lecksucher mit dem testgasfreien Schutzgas zu reinigen. Des Weiteren besteht auch die Möglichkeit, bei einer Schnüffelsonde das testgasfreie Schutzgas, vorzugsweise heliumfreien Stickstoff, über eine separate Schutzgasleitung dem 3-Wege-Ventil zuzuführen.

Die Reinigung mit testgasfreiem Schutzgas ist besonders vorteilhaft bei der Verwendung eines trockenen Lecksuchers. Im Gegensatz zu einem nassen Lecksucher beeinflusst z. B. bei einem trockenen Lecksucher das eingelagerte Helium in der Förderpumpe des Lecksuchers den Helium-Partialdruck im GasDetektor über Stunden. Bei einer Reinigung mit heliumfreien Schutzgas können selbst trockene Lecksucher innerhalb von 10 Minuten auf Leckraten von kleiner 10⁻⁰⁹ mbar·l/s gereinigt werden.

Bei einer vorteilhaften Variante dieser Ausgestaltungsform mit 3-Wege-Ventil ist ein Umschalter zum Schalten des 3-Wege-Ventils im Handstück vorgesehen. Dieser Umschalter schaltet das im Handstück integrierte 3-Wege-Ventil. Zudem erlaubt der Umschalter, die Versorgung mit testgasfreiem Schutzgas der Gasversorgungseinheit zu- oder abzuschalten. Optimalerweise erfolgt vor Messbeginn die automatische Reinigung der Schnüffelleitung mit testgasfreiem Schutzgas. Beim Erreichen einer Leckrate von kleiner 10⁻⁰⁹ mbar·l/s verharrt der Lecksucher im Status "Messbereit", bis der Status "Messen" angefordert wird und das 3-Wege-Ventile geöffnet wird. Zudem erlaubt ein weiterer Modus die Beaufschlagung der Schnüffelsonde mit testgasfreiem Schutzgas auszusetzen.

Gemäß einer weiteren bevorzugten Ausführungsform der Erfindung wird nicht nur die Schnüffelsonde mit testgasfreiem Schutzgas beaufschlagt, sondern bei einem Lecksucher ohne Fremdgasbarriere auch das Gehäuse des Lecksuchers. Dieses gilt insbesondere für handliche Lecksucher, deren Schnüffelsonde mit dem Gehäuse des Lecksuchers fest verbundenen ist.

Zusammengefasst ermöglicht die erfindungsgemäße Schnüffelsonde, mit der Fremdgasbarriere die Gasdichtheit von Prüflingen mit einem Überdruck-Testgasverfahren bis zu einem Testgasstrom zwischen 10-10 mbar·l/s bis 10-11 mbar·l/s nachzuweisen. Dieser Testgasstrom entspricht einem theoretischen Gasverlust von bis zu 1 cm3 in 3000 Jahren. Zusammengefasst sind folgende Aspekte offenbart:

Gemäß einem ersten Aspekt wird eine Schnüffelsonde eines Lecksuchers vorgeschlagen, dadurch gekennzeichnet, dass die Fremdgasbarriere einer Schnüffelsonde verhindert, dass Gase aus der Atmosphäre in das von einer Förderpumpe zum Lecksucher geförderte Messgas über die Schnüffelleitung einpenetrieren können.

Gemäß einem zweiten Aspekt der Schnüffelsonde kann hierbei die Fremdgasbarriere der Schnüffelleitung aus einer metallischen Leitung mit einem hydraulischen Widerstand im Handstück gebildet werden.

Gemäß einem dritten Aspekt der Schnüffelsonde kann die metallische Leitung aus einem metallischen Wellschlauch bestehen.

Gemäß einem vierten Aspekt der Schnüffelsonde kann die Fremdgasbarriere der Schnüffelleitung aus einer metallischen Kapillare bestehen.

Gemäß einem fünften Aspekt der Schnüffelsonde kann die Fremdgasbarriere der Schnüffelleitung aus einer elastischen Leitung aus Kunststoff mit einem hydraulischen Widerstand gebildet sein. Die elastische Leitung wird dabei von einem dichten Schutzgasschlauch umfasst und der Zwischenraum zwischen Schutzgasschlauch und der elastischen Leitung mit einem testgasfreien Schutzgas durchströmt.

Gemäß einem sechsten Aspekt der Schnüffelsonde kann die Fremdgasbarriere der Schnüffelleitung aus einer elastischen Kapillare aus Kunststoff, die von einem dichten Schutzgasschlauch umfasst wird, wobei der Zwischenraum mit einem testgasfreien Schutzgas durchströmt wird, gebildet sein.

Gemäß einem weiteren Aspekt der Schnüffelsonde kann eine separate Förderpumpe vorgesehen sein, die über eine Schnüffelleitung mit einer Fremdgasbarriere Messgas fördert, wobei ein Teil des Messgases über einen hydraulischen Widerstand am Saugmund der Schnüffelsonde strömt.

Gemäß einem weiteren Aspekt kann die Fremdgasbarriere der Schnüffelleitung auch die Schnüffelleitung zwischen dem Ansaugstutzen des Lecksuchers und der Förderpumpe vom Lecksucher einschließen.

Gemäß einem weiteren Aspekt der Schnüffelsonde kann im Ansaugbereich der Schnüffelleitung ein 2-Wege-Ventil im Handstück den über die Schnüffelleitung geförderten Volumenstrom vom Messgas zum Lecksucher unterbrechen.

Gemäß einem weiteren Aspekt der Schnüffelsonde kann im Schnüffelmund der Schnüffelleitung ein 3-Wege-Ventil im Handstück den Volumenstrom vom Messgas unterbrechen und anstelle von Messgas testgasfreies Schutzgas über das 3-Wege-Ventil und die Schnüffelleitung zum Lecksucher fördern.

Gemäß einem weiteren Aspekt der Schnüffelsonde kann das testgasfreie Gas über eine eigene Gasversorgungsleitung zum 3-Wege-Ventile im Handstück strömen.

Gemäß einem weiteren Aspekt der Schnüffelsonde kann das testgasfreie Gas über den Zwischenraum 20 der Schnüffelsonde 1 zum 3-Wege-Ventil im Handstück strömen.

Gemäß einem dreizehnten Aspekt kann das testgasfreie Gas über das Gehäuse des Lecksuchers und den Ansaugstutzen des Lecksuchers sowie den Saugmund von der Schnüffelsonde strömen.

Gemäß einem weiteren Aspekt kann das testgasfreie Gas über das Gehäuse des Lecksuchers und einer Verbindungsleitung zwischen dem Gehäuse des Lecksuchers und der Schnüffelsonde zum Saugmund der Schnüffelleitung strömen.

Gemäß einem weiteren Aspekt können die Verunreinigungen von Testgas im testgasfreien Schutzgas, mit dem die Fremdgasbarriere der Schnüffelsonde gebildet wird, um den Faktor 100 kleiner als in der Atmosphäre sein.

Gemäß einem weiteren Aspekt können die Verunreinigungen von Helium im testgasfreien Schutzgas, mit dem die Fremdgasbarriere der Schnüffelsonde gebildet wird, 10 ppt betragen.

Weitere Einzelheiten und Verfahrensschritte der Erfindung werden im Folgenden unter Bezug auf die beigefügten Zeichnungen beschrieben. Es zeigen:
Figur 1: den genereller Aufbau einer Schnüffelsonde mit einer Fremdgasbarriere;
Figur 2: eine Schnüffelsonde mit einer metallischen Leitung gemäß einem nicht- erfindungsgemäßen Beispiel;
Figur 3: eine Schnüffelsonde mit einer elastischen Leitung;
Figur 4: eine Schnüffelsonde mit einer metallischen Kapillare gemäß einem nicht-erfindungsgemäßen Beispiel;
Figur 5: eine Schnüffelsonde mit einer elastischen Kapillare;
Figur 6: eine Schnüffelsonde mit einer Schnüffelleitung und einem 2-Wege-Ventil;
Figur 7: eine Schnüffelsonde mit einer metallischen Leitung und einem 3-Wege-Ventil gemäß einem nicht-erfindungsgemäßen Beispiel;
Figur 8: eine Schnüffelsonde mit einer elastischen Leitung und einem 3-Wege-Ventil;
Figur 9: eine Schnüffelsonde mit einer elastischen Kapillare und einem 3-Wege-Ventil;
Figur 10: eine Schnüffelsonde mit einem Lecksucher ohne Fremdgasbarriere;
Figur 11: eine Schnüffelsonde mit einer eigenen Förderpumpe;

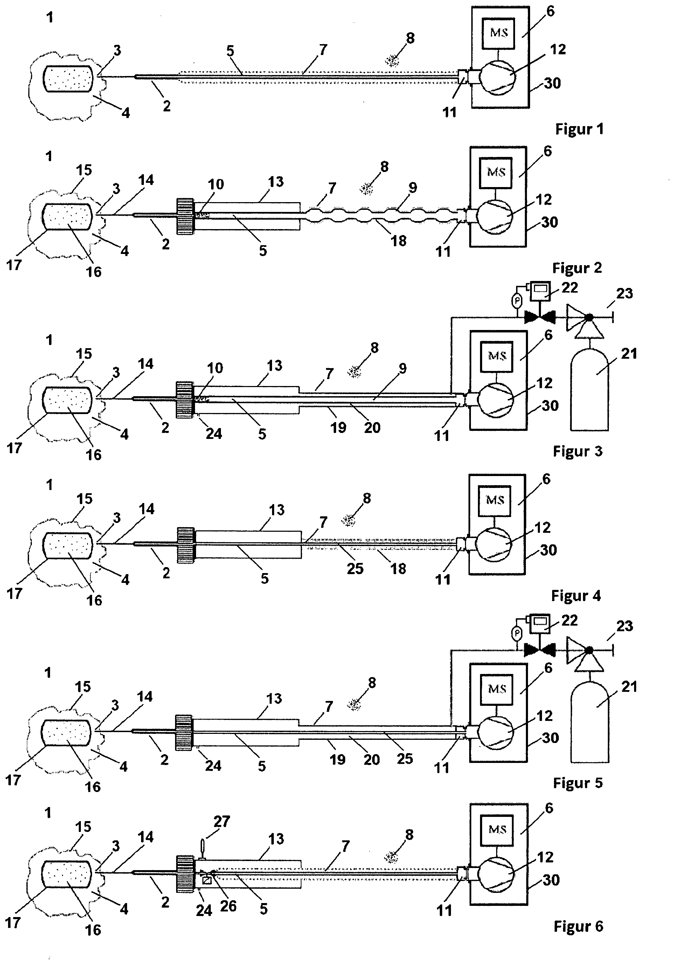

**Fig. 1** zeigt schematisch eine Vorrichtung zur erfindungsgemäßigen Bereitstellung einer Schnüffelsonde zur Reduzierung der Querempfindlichkeit mit Gasen in der Atmosphäre. Die Schnüffelsonde 1 umfasst einen Schnüffelmund 2, über den Messgas 3 aus einer Prüfkammer 4, welche gleichfalls mit einem testgasfreien Schutzgas beaufschlagt ist, über die Schnüffelleitung 5 der Schnüffelsonde, die entweder aus einer Leitung mit einem hydraulischen Widerstand oder einer Kapillare ohne hydraulischen Widerstand gebildet wird, zum Lecksucher 6 gefördert wird. Der Lecksucher 6 umfasst eine Förderpumpe 17, um das Messgas zum Lecksucher 6 zu fördern und eine Detektionseinrichtung, z. B. ein Massenspektrometer (MS), um evtl. im Messgas vorhandenes Testgas zu detektieren. Dabei verhindert die Schnüffelleitung 5 mit einer Fremdgasbarriere 7, dass atmosphärische Gase 8 in das geförderte Messgas einpenetrieren können. Das Einbringen eines hydraulischen Widerstands in die Schnüffelleitung, wenn diese nicht als Kapillare ausgeführt ist, ist an sich aus dem Stand der Technik bekannt. Der hydraulische Widerstand kann ein gesintertes Metall oder eine gesinterte Keramik sein. Die in Fig. 1 schematisch gezeigte Schnüffelsonde mit einer Fremdgasbarriere 7 wird in den weiteren bevorzugten Ausführungsformen der Erfindung beschrieben.

**Fig. 2** zeigt eine Schnüffelsonde 1, die nicht unter den Schutzbereich der Ansprüche fällt, mit einer Schnüffelleitung 5 mit einer Fremdgasbarriere 7, die aus einer metallischen Leitung 9 und einem hydraulischen Widerstand 10 besteht. Die Schnüffelleitung 5, die vorzugsweise aus einem metallischen Wellschlauch gebildet wird, verhindert, dass atmosphärische Gase 8 in das Messgas 3 einpenetrieren können. Über den Saugmund 11, der mit dem Lecksucher 6 gasdicht verbunden ist, wird stetig Messgas von der Förderpumpe 12 des Lecksuchers über den Schnüffelmund 2 des Handstückes 13 aus einer Prüfkammer 4 angesaugt. Dabei erlaubt die Schnüffelkanüle 14 des Schnüffelmundes, dass vorteilhafterweise die Hülle 15 einer flexiblen Prüfkammer durchstochen werden kann und der mit Testgas 16 beaufschlagte Prüfling 17 abgeschnüffelt werden kann. Um zu verhindern, dass die metallische Leitung 9 mechanisch verletzt wird, wird die Leitung von einem Kunststoff 18, vorzugsweise von einem Elastomer, umfasst. Eine weitere Ausführungsform der Erfindung wird gebildet aus einer Schnüffelleitung 5 mit einer Fremdgasbarriere 7 nach

**Fig. 3**, wobei die Schnüffelleitung aus einer elastischen Leitung 9 mit einem hydraulischen Widerstand 10 besteht und diese Schnüffelleitung mit einem testgasfreien Schutzgas 21 umspült wird. Vorzugsweise besteht die Leitung 9 aus Polyethylen, die von einem elastischen Schutzschlauch 19 umfasst wird, wobei der Zwischenraum 20 über dem Saugmund 11 mit einem testgasfreien Schutzgas 21 beaufschlagt wird. Als testgasfrei werden Schutzgase angesehen, deren Verunreinigungen mit Testgas um den Faktor 100 kleiner als in der Atmosphäre sind. Bei der Beaufschlagung des Zwischenraumes, vorzugsweise mit heliumfreien Stickstoff, dessen Helium-Verunreinigungen kleiner 10 ppt sind, ist zu beachten, dass der Überdruck so gewählt wird, dass verhindert wird, dass atmosphärische Gase 8, unter anderen das atmosphärisches Helium, über den Schutzschlauch 19 und der elastischen Leitung 9 in das geförderte Messgas 3 einpenetrieren. Die Einregulierung des Überdruckes im Zwischenraum 20 erfolgt vorzugsweise auf einen Druck knapp oberhalb von 10 hPa durch eine Druckhaltevorrichtung 22 einer Gasversorgungseinheit 23, vorzugsweise durch eine elektronische Druckhaltevorrichtung einer Gasversorgungseinheit, wobei das testgasfreie Schutzgas über eine Öffnung 24 im Handstück der Schnüffelsonde in die Umgebung abströmt.

In Gegensatz zu der Ausführung mit einer Schnüffelsonde mit einer Schnüffelleitung mit einem hydraulischen Widerstand nach Fig. 2 und 3, bei der der Druckabfall mittels des hydraulischen Widerstandes im Handstück der Leitung gewährleistet wird, erfolgt die Gewährleistung des Druckabfalles bei einer Schnüffelsonde mit einer Kapillare durch den hydraulischen Widerstand der Leitung.

Um zu verhindern, dass Gase aus der Atmosphäre 8 in das geförderte Messgas 3 einpenetrieren, erfolgt gemäß **Fig. 4**, was nicht in den Schutzbereich der Ansprüche fällt, die Ausführung der Fremdgasbarriere 7 mit einer metallischen Kapillare 25. Um zu verhindern, dass die Schnüffelleitung 5 abknickt, wird die metallische Kapillare von einem Kunststoff 18, vorzugsweise von einem steifen Elastomer, umfasst.

Eine weitere Ausführung der Erfindung mit einer Fremdgasbarriere 7 nach **Fig. 5** wird mit einer Schnüffelleitung 5 gebildet, welche aus einer elastischen Kapillare 25 besteht und von einem Schutzschlauch 19 umfasst wird. Vorzugsweise besteht die elastische Kapillare aus einem Elastomere, welches von einem dichten Schutzschlauch umfasst wird. Um zu verhindern, dass atmosphärische Gase 8 in das geförderte Messgas 3 einpenetrieren, wird der Zwischenraum 20 der Schnüffelsonde stetig mit testgasfreiem Schutzgas 21 über den Saugmund 11 der Schnüffelsonde 1 beaufschlagt. Bei der Beaufschlagung ist zu beachten, dass der Überdruck im Zwischenraum 20 so gewählt wird, dass verhindert wird, dass atmosphärische Gase 8, unter anderem atmosphärisches Helium, über den Schutzschlauch 19 und die elastischen Kapillare 25 in das Messgas 3 einpenetrieren. Die Einregulierung des Überdruckes im Zwischenraum erfolgt vorzugsweise auf einen Druck knapp oberhalb von 10 hPa durch eine Druckhaltevorrichtung 22 einer Gasversorgungseinheit 23, vorzugsweise durch eine elektronische Druckhaltevorrichtung einer Gasversorgungseinheit. Dabei strömt vorzugsweise das testgasfreie Schutzgas über eine Öffnung 24 im Handstück 13 der Schnüffelsonde in die Umgebung ab.

Entsprechend einer weiteren Ausführung der Erfindung nach **Fig. 6**, einer Variante gemäß den Fig. 2, 3, 4 oder 5, wobei zusätzlich ein 2-Wege-Ventil 26 im Ansaugbereich der Schnüffelleitung 5 angeordnet ist, besteht die Möglichkeit, dass durch das Schließen des 2-Wege-Ventils 26 die Förderpumpe 12 des Lecksuchers 6 über die Schnüffelleitung 5 kein Messgas 3 mehr zum Lecksucher fördert. Dieses erlaubt es, die Schnüffelleitung 5 sowie den Lecksucher vor der Prüfung vor Verunreinigungen 8 zu schützen. Zudem ergibt sich der Vorteil, dass der Lecksucher im Vorfeld der Prüfung von Verunreinigungen gereinigt werden kann. Die Schaltung des 2-Wege-Ventils erfolgt durch einen Schalter oder Taster, vorzugsweise durch einen Schalter 27 im Handstück 13.

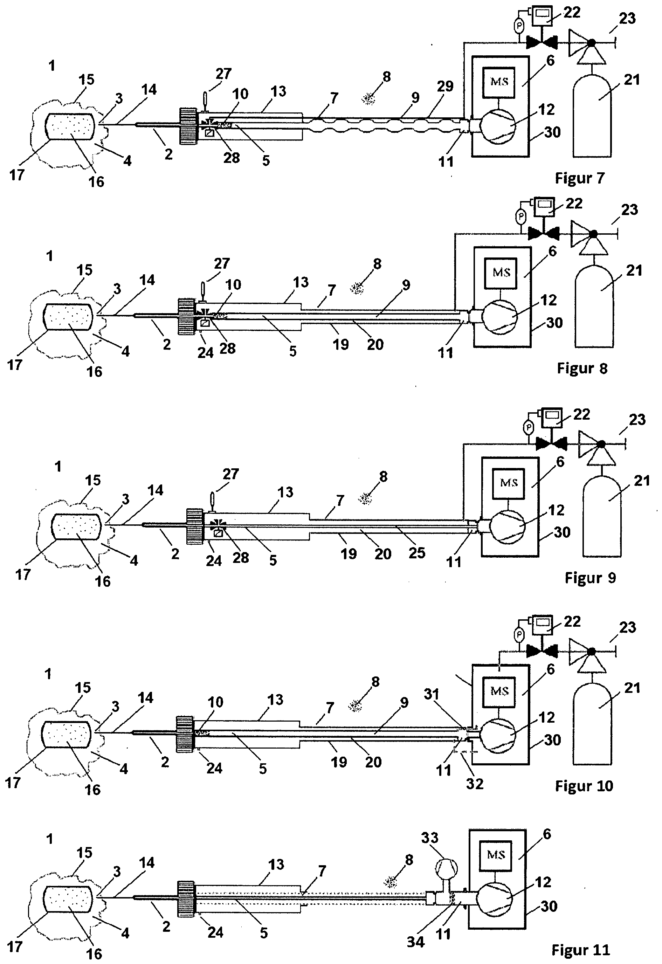

Gemäß einem weiteren Beispiel, welches nicht unter den Schutzbereich der Erfindung fällt, **(****Fig. 7**) mit einer Fremdgasbarriere 7, einer Schnüffelleitung 5, die aus einer metallischen Leitung 9 sowie einem 3-Wege-Ventil 28 vor dem hydraulischen Widerstand 10 des Schnüffelmundes 2 gebildet wird, besteht die Möglichkeit, über testgasfreies Schutzgas 21 einer Gasversorgungseinheit 23 die Schnüffelsonde 1 und den Lecksucher 6 im Vorfeld der Messung von Verunreinigungen zu reinigen. Vorzugsweise wird die Schnüffelleitung 5 aus einem metallischen Wellschlauch nach der Variante der Fig. 2 gebildet. Die Reinigung erfolgt mit einem testgasfreien Schutzgas 21, vorzugsweise mit heliumfreien Stickstoff, dessen Helium-Verunreinigungen kleiner 10 ppt sind. Die Zuführung des testgasfreien Schutzgases zum 3-Wege-Ventil 28 erfolgt über eine separate Gasversorgungsleitung 29. Die separate Gasersorgungsleitung verläuft entweder innerhalb oder außerhalb der metallischen Schnüffelleitung 5, vorzugsweise aber außerhalb der metallischen Schnüffelleitung, wobei diese vorzugsweise durch einen außenliegenden Schlauch aus Kunststoff, z. B. einen Schlauch aus Polyethylen, gebildet wird. Geschaltet wird das 3-Wege-Ventil durch einen Schalter 27 im Handstück 13.

Gemäß einer weiteren Ausführung der Erfindung mit einem 3-Wege-Ventil 28 **(****Fig. 8****)**, gemäß einer Variante der Schnüffelsonde nach Fig. 3, einer Schnüffelsonde 1, bei der die Fremdgasbarriere 7 durch eine Leitung 9 mit einem hydraulischen Widerstand 10 sowie einem Schutzschlauch 19 gebildet wird, strömt das testgasfreie Schutzgas 21 vom Saugmund 11 über den Zwischenraum 20 der Schnüffelsonde 1 zum 3-Wege-Ventil 28. Wird das 3-Wege-Ventil durch den Schalter 27 im Handstück 13 geschaltet, so strömt testgasfreies Schutzgas 21 über das 3-Wege-Ventil und der Schnüffelleitung 5 zum Lecksucher 6.

Gemäß einer weiteren Ausführung der Erfindung mit einem 3-Wege-Ventil 28 **(****Fig. 9****)**, gemäß einer Variante der Schnüffelsonde nach Fig. 5 mit einer elastischen Kapillare 25 und einem Schutzschlauch 19, strömt über den Zwischenraum 20 testgasfreies Schutzgas 21 vom Saugmund 11 über das 3-Wege-Ventil 28 und der Schnüffelleitung 5 zum Lecksucher 6. Durch das Schalten des 3-Wege-Ventils durch den Schalter 27 wird das 3-Wege-Ventil geöffnet, so dass testgasfreies Schutzgas 21 anstelle von Messgas über das 3-Wege-Ventil und die Kapillare 25 zum Lecksucher 6 strömt.

Vorzugsweise erfolgt bei der Variante nach Fig. 7, 8 und 9 die Schaltung des 3-Wege-Ventils 28 durch einen Schaltimpuls eines dreistufigen Schalters 27. Des Weiteren wird bevorzugt, dass das 3-Wege-Ventils 28 durch ein Schaltsignal vom Lecksucher 6 geschaltet werden kann. Zudem erlaubt ein Schaltsignal die Gasversorgung 23 mit testgasfreiem Schutzgas 21 zu- oder abzuschalten. Durch das Schalten des 3-Wege-Ventils in den Status "Reinigen" wird anstelle von Messgas 3 testgasfreies Schutzgas 21 zum Lecksucher 6 gefördert. Im Vorfeld der Messung können somit die Schnüffelsonde 1 und der Lecksucher 6 mit testgasfreiem Schutzgas 21 gereinigt werden. Vorzugsweise verharrt der Lecksucher mit der Schnüffelsonde in diesem Zustand, bis eine Leckrate von kleiner 10⁻⁰⁹ mbar·l/s erreicht wird. Nach der Reinigung der Schnüffelleitung 5 und des Lecksuchers wird durch das Schalten des Status "Messbereit" das 3-Wege-Ventil geöffnet, so dass wieder Messgas 3 zum Lecksucher 6 gefördert wird.

Gemäß **Fig. 10**, einer weiteren Ausführung der Erfindung, wird über das Gehäuse 30 des Lecksuchers 6 die Schnüffelsonde 1 mit testgasfreiem Gas 21 beaufschlagt. Dieses gilt besonders für handliche Lecksucher 6, deren Schnüffelsonde 1 untrennbar mit dem Gehäuse des Lecksuchers verbunden ist. Bei dieser Variante strömt das testgasfreie Gas 21 vom Lecksucher 6 über den Saugmund 11 in den Zwischenraum 20 der Schnüffelsonde 1. Des Weiteren besteht die Möglichkeit, den Zwischenraum 20 5 über eine separate Verbindungsleitung 32 zwischen dem Gehäuse 30 des Lecksuchers 6 und dem Saugmund 11 der Schnüffelsonde 1mit testgasfreien Schutzgas 21 zu beaufschlagen. Dieses gilt besonders für Lecksucher ohne eine eigene Fremdgasbarriere.

**Fig. 11** zeigt schematisch eine weitere Variante einer Schnüffelsonde mit einer Fremdgasbarriere 7, eine Schnüffelsonde 1 mit einer separaten Förderpumpe 33 und einem hydraulischen Widerstand 34 am Saugmund 11 der Schnüffelleitung 5. Die Förderpumpe der Schnüffelsonde fördert über den Schnüffelmund 2 Messgas 3 über die Schnüffelleitung 5 mit einer Fremdgasbarriere 7 aus einer Prüfkammer 4 zum hydraulischen Widerstand 34 am Saugmund 11 der Schnüffelleitung, wobei ein Teilstrom zum Lecksucher 6 strömt, aber der Hauptstrom des Messgases 3 über die Förderpumpe 33 der Schnüffelsonde in die Umgebung abströmt. Dabei verhindern die bereits offenbarten Merkmale der Fremdgasbarriere 7, dass atmosphärisches Gas 8 in das von der Förderpumpe geförderte Messgas 3 einpenetrieren kann.

Die in der vorstehenden Beschreibung, den Zeichnungen und den Ansprüchen offenbarten Merkmale der Erfindung können sowohl einzeln als auch in Kombination für die Verwirklichung für die Erfindung in ihren verschiedenen Ausgestaltungen von Bedeutung sein.

### BEZUGSZEICHEN

- [1]: Schnüffelsonde
- [2]: Schnüffelmund
- [3]: Messgas
- [4]: Prüfkammer
- [5]: Schnüffelleitung
- [6]: Lecksucher
- [7]: Fremdgasbarriere
- [8]: atmosphärisches Gas
- [9]: Leitung
- [10]: hydraulischer Widerstand
- [11]: Saugmund
- [12]: Förderpumpe
- [13]: Handstück
- [14]: Schnüffelkanüle
- [15]: Hülle
- [16]: Testgas
- [17]: Prüfling
- [18]: Kunststoff
- [19]: Schutzschlauch
- [20]: Zwischenraum
- [21]: testgasfreies Schutzgas
- [22]: Druckhaltevorrichtung
- [23]: Gasversorgungseinheit
- [24]: Öffnung im Handstück
- [25]: Kapillare
- [26]: 2-Wege-Ventil
- [27]: Schalter
- [28]: 3-Wege-Ventil
- [29]: Gasversorgungsleitung
- [30]: Gehäuse des Lecksuchers
- [31]: Verbindungsleitung über den Saugmund der Schnüffelsonde
- [32]: Verbindungsleitung vom Gehäuse zur Schnüffelsonde
- [33]: Förderpumpe der Schnüffelsonde
- [34]: hydraulischer Widerstand am Saugmund

## Patentansprüche

1. Lecksuchvorrichtung zur Bestimmung der Gasdichtheit eines Prüflings, umfassend einen Lecksucher (6) zur Detektion eines Testgases (16) in einem Messgas (3) und eine am Lecksucher (6) angeschlossene Schnüffelsonde (1), über die das Messgas (3) dem Lecksucher (6) zuführbar ist, wobei die Schnüffelsonde einen Schnüffelmund (2) und eine Schnüffelleitung (5) zur Förderung eines über den Schnüffelmund (2) aufgenommenen Messgases (3) über die Schnüffelleitung (5) zum Lecksucher (6) umfasst, **gekennzeichnet durch**
eine Fremdgasbarriere (7) der Schnüffelsonde, die verhindert, dass Gase aus der Atmosphäre (8) über die Schnüffelleitung (5) in das zum Lecksucher (6) geförderte Messgas (3) einpenetrieren können,
a) wobei die Schnüffelleitung (5) als elastische Leitung aus Kunststoff ausgeführt ist, in die ein hydraulischer Widerstand (10) eingebracht ist, bevorzugt im Bereich in dem das Testgas angesaugt wird, wobei zur Ausbildung der Fremdgasbarriere (7) die elastische Leitung von einem Schutzgasschlauch (19) umgeben ist und zwischen dem Schutzgasschlauch (19) und der elastischen Leitung ein von einem testgasfreien Schutzgas durchströmbarer Zwischenraum (20) vorgesehen ist, oder
b) wobei die Schnüffelleitung (5) als elastische Kapillare aus Kunststoff ausgeführt ist, wobei zur Ausbildung der Fremdgasbarriere (7) die elastische Kapillare von einem Schutzgasschlauch (19) umfasst wird und zwischen dem Schutzgasschlauch (19) und der elastischen Kapillare ein von einem testgasfreien Schutzgas (21) durchströmbarer Zwischenraum (20) vorgesehen ist; und
Mittel zur Beaufschlagung des Zwischenraums (20) mit dem testgasfreien Schutzgas (21).

2. Lecksuchvorrichtung nach Anspruch 1, **dadurch gekennzeichnet, dass** die Schnüffelsonde einen Saugmund (11) zur Verbindung der Schnüffelsonde mit dem Lecksucher (6) aufweist, wobei an dem Saugmund (11) eine Förderpumpe (33) angeschlossen ist, um über die Schnüffelleitung (5) mit der Fremdgasbarriere (7) Messgas (3) zu fördern, wobei in den Saugmund (11) zwischen der Anschlussstelle der Förderpumpe (33) und einem dem Lecksucher (6) zugewandten Ende des Saugmundes (11) ein hydraulischer Widerstand (34) eingebracht ist, so dass im Betrieb der Förderpumpe (33) ein Teil des geförderten Messgases (3) über den hydraulischen Widerstand (34) in den Lecksucher (6) einströmt und ein Teil des geförderten Messgases (3) über die Förderpumpe (33) in die Umgebung abströmt.

3. Lecksuchvorrichtung nach einem der Ansprüche 1 bis 2, **dadurch gekennzeichnet, dass** im Ansaugbereich der Schnüffelleitung (5) ein 2-Wege-Ventil (26) angeordnet ist, mit dem ein über die Schnüffelleitung (5) geförderter Volumenstrom von Messgas (3) zum Lecksucher (6) unterbrochen werden kann.

4. Lecksuchvorrichtung nach einem der Ansprüche 1 bis 3, **dadurch gekennzeichnet, dass** im Ansaugbereich der Schnüffelleitung (5) ein 3-Wege-Ventil (28) angeordnet ist, mit dem der über die Schnüffelleitung (5) geförderte Volumenstrom von Messgas (3) zum Lecksucher (6) unterbrochen und gleichzeitig ein testgasfreies Schutzgas in die Schnüffelleitung (5) eingeleitet werden kann, um das testgasfreie Schutzgas anstelle von Messgas (3) zum Lecksucher (6) zu fördern.

5. Lecksuchvorrichtung nach Anspruch 4, **gekennzeichnet durch** eine separate Gasversorgungsleitung (29), die am 3-Wege-Ventil angeschlossen ist und über die ein testgasfreies Schutzgas (21) dem 3-Wege-Ventil zuführbar ist.

6. Lecksuchvorrichtung nach Anspruch 4, **dadurch gekennzeichnet, dass** ein Anschluss des 3-Wegeventils (28) mit dem Zwischenraum (20) fluidisch verbunden ist, so dass testgasfreies Gas über den Zwischenraum (20) der Schnüffelsonde (1) zum 3-Wege-Ventil (28) strömen kann.

7. Lecksuchvorrichtung nach einem der vorhergehenden Ansprüche, **dadurch gekennzeichnet, dass** sich die Fremdgasbarriere bis in den Lecksucher (6) erstreckt und verhindert, dass Gase aus der Atmosphäre (8) über eine zwischen einem Ansaugstutzen und einer Förderpumpe (12) des Lecksuchers (6) erstreckenden Schnüffelleitung in das zum Lecksucher (6) geförderte Messgas (3) einpenetrieren können.

8. Lecksuchvorrichtung nach einem der vorhergehenden Ansprüche, **gekennzeichnet durch** eine Gasversorgungseinheit (23) zur Bereitstellung von testgasfreiem Schutzgas (21), mittels der das testgasfreie Schutzgas (21) in ein Gehäuse (30) des Lecksuchers (6) einleitbar ist, wobei das in das Gehäuse (30) eingeleitete Schutzgas (21)
a) über einen Ansaugstutzen des Lecksuchers (6) einem mit dem Ansaugstutzen verbundenen Saugmund (11) der Schnüffelsonde (1) zuführbar ist; oder
b) über eine Verbindungsleitung zwischen dem Gehäuse (30) des Lecksuchers (6) und der Schnüffelsonde (1) einem mit dem Lecksucher (6) verbundenen Saugmund (11) der Schnüffelleitung zuführbar ist.

9. Lecksuchvorrichtung nach einem der vorhergehenden Ansprüche, **gekennzeichnet durch** eine Gasversorgungseinheit (23) zur Bereitstellung von testgasfreiem Schutzgas (21), mit dem die Fremdgasbarriere (7) der Schnüffelsonde gebildet wird,
a) wobei die Verunreinigungen von Testgas (16) im testgasfreien Schutzgas (21) um den Faktor 100 kleiner als in der Atmosphäre sind; und/oder
b) wobei die Verunreinigungen von Helium im testgasfreien Schutzgas (21) höchstens 10 ppt (parts per trillion) betragen; und/oder
c) wobei die Gasversorgungseinheit (23) ausgeführt ist, den Zwischenraum (20) so mit dem testgasfreien Schutzgas (21) zu beaufschlagen, dass ein Überdruck von 5 hPa bis 30 hPa zur Umgebung im Zwischenraum (20) zwischen der Schnüffelleitung (5) und dem Schutzgasschlauch (19) gehalten wird; und/oder
d) wobei ein Handstück (13) der Schnüffelsonde eine Öffnung aufweist, über die testgasfreies Schutzgas (21) aus dem Zwischenraum (20) in die Atmosphäre ausströmt.

## Claims

1. Leak detection device for determining the gas tightness of a test specimen, comprising a leak detector (6) for detecting a test gas (16) in a measurement gas (3) and a sniffer probe (1) connected to the leak detector (6),
by means of which probe the measurement gas (3) can be conveyed to the leak detector (6), the sniffer probe comprising a sniffer mouth (2) and a sniffer line (5) for conveying a measurement gas (3) drawn up by the sniffer mouth (2) via the sniffer line (5) to the leak detector (6), **characterised by**
a foreign gas barrier (7) of the sniffer probe, which prevents gases from the atmosphere (8) penetrating the measurement gas (3) conveyed to the leak detector (6) via the sniffer line (5),
a) the sniffer line (5) being designed as a resilient line made from plastics material, into which line a hydraulic resistor (10) is inserted, preferably in the region in which the test gas is aspirated, said resilient line being surrounded by an inert gas tube (19) to form the foreign gas barrier (7), and an intermediate space (20) through which an inert gas containing no test gas can flow being provided between the inert gas tube (19) and the resilient line, or
b) the sniffer line (5) being designed as a resilient capillary tube made from plastics material, the resilient capillary tube being enclosed by an inert gas tube (19) to form the foreign gas barrier (7) and an intermediate space (20) through which an inert gas (21) containing no test gas can flow being provided between the inert gas tube (19) and the resilient capillary tube; and
means of filling the intermediate space (20) with the inert gas (21) containing no test gas.

2. Leak detection device according to claim 1, **characterised in that** the sniffer probe comprises a suction mouth (11) to connect the sniffer probe to the leak detector (6), a feed pump (33) being connected to said suction mouth (11) to convey measurement gas (3) via the sniffer line (5) with the foreign gas barrier (7), and a hydraulic resistor (34) being inserted in the suction mouth (11) between the connection with the feed pump (33) and one end of the suction mouth (11) facing the leak detector (6) such that some of the conveyed measurement gas (3) flows into the leak detector (6) via the hydraulic resistor (34) during operation of the feed pump (33) and some of the conveyed measurement gas (3) flows into the surrounding area via the feed pump (33).

3. Leak detection device according to either of claims 1 or 2, **characterised in that** a 2-way valve (26) is arranged in the suction region of the sniffer line (5), by means of which valve a flow of measurement gas (3) conveyed to the leak detector (6) via the sniffer line (5) can be interrupted.

4. Leak detection device according to any of claims 1 to 3, **characterised in that** a 3-way valve (28) is arranged in the suction region of the sniffer line (5), by means of which valve a flow of measurement gas (3) conveyed to the leak detector (6) via the sniffer line (5) can be interrupted and an inert gas containing no test gas can simultaneously be admitted to the sniffer line (5) to convey the inert gas containing no test gas to the leak detector (6) instead of the measurement gas.

5. Leak detection device according to claim 4, **characterised by** a separate gas supply line (29), which is connected to the 3-way valve and by means of which an inert gas (21) containing no test gas can be conveyed to the three-way valve.

6. Leak detection device according to claim 4, **characterised in that** a connection of the 3-way valve (28) is fluidically connected to the intermediate space (20) such that gas containing no test gas can flow via the intermediate space (20) of the sniffer probe (1) to the 3-way valve (28).

7. Leak detection device according to any one of the preceding claims, **characterised in that** the foreign gas barrier extends into the leak detector (6) and prevents gases from the atmosphere (8) penetrating the measurement gas (3) conveyed to the leak detector (6) via a sniffer line extending between a suction nozzle and a feed pump (12) of the leak detector (6).

8. Leak detection device according to any one of the preceding claims, **characterised by** a gas supply unit (23) to provide inert gas (21) containing no test gas, by means of which unit the inert gas (21) containing no test gas can be admitted to a housing (30) of the leak detector (6), said inert gas (21) admitted into the housing (30)
a) being able to be conveyed via a suction nozzle of the leak detector (6) to a suction mouth (11) of the sniffer probe (1), said suction mouth being connected to the suction nozzle; or
b) being able to be conveyed via a connecting line between the housing (30) of the leak detector (6) and the sniffer probe (1) to a suction mouth (11) of the sniffer line, said mouth being connected to the leak detector (6).

9. Leak detection device according to any one of the preceding claims, **characterised by** a gas supply unit (23) to provide inert gas (21) containing no test gas, the foreign gas barrier (7) of the sniffer probe being formed of said inert gas,
a) the volume of test gas (16) impurities in the inert gas (21) containing no test gas being lower by a factor of 100 than in the atmosphere; and/or
b) helium impurities in the inert gas (21) containing no test gas amounting to no more than 10 ppt (parts per trillion); and/or
c) the gas supply unit (23) being designed to fill the intermediate space (20) with inert gas (21) containing no test gas such that an overpressure of 5 hPa to 30 hPa is maintained in the intermediate space (20) between the sniffer line (5) and the inert gas tube (19) compared to the surrounding area; and/or
d) a handpiece (13) of the sniffer probe comprises an opening by means of which the inert gas (21) containing no test gas flows from the intermediate space (20) into the atmosphere.

## Revendications

1. Dispositif de recherche de fuites pour définir l'étanchéité aux gaz d'un échantillon, comprenant un système chercheur de fuites (6) pour détecter un gaz de test (16) dans un gaz de mesure (3) et une sonde de reniflage (1) raccordée au système chercheur de fuites (6), par l'intermédiaire de laquelle le gaz de mesure (3) peut être amené au système chercheur de fuites (6), dans lequel la sonde de reniflage comprend une embouchure de reniflage (2) et un conduit de reniflage (5) pour refouler un gaz de mesure (3) logé par l'intermédiaire de l'embouchure de reniflage (2) vers le système chercheur de fuites (6) en passant par le conduit de reniflage (5), **caractérisé par**
une barrière aux gaz extérieurs (7) de la sonde de reniflage, qui empêche que des gaz provenant de l'atmosphère (8) puissent pénétrer dans le gaz de mesure (3) refoulé vers le système chercheur de fuites (6) en passant par le conduit de reniflage (5),
a) dans lequel le conduit de reniflage (5) est réalisé sous la forme d'un conduit élastique composé de matière plastique, dans lequel une résistance (10) hydraulique est introduite, de manière préférée dans la zone, dans laquelle le gaz de test est aspiré, dans lequel le conduit élastique est entouré par un tuyau flexible de gaz de protection (19) pour réaliser la barrière aux gaz extérieurs (7) et un espace intermédiaire (20) pouvant être traversé par un flux d'un gaz de protection sans gaz de test est prévu entre le tuyau flexible de gaz de protection (19) et le conduit élastique, ou
b) dans lequel le conduit de reniflage (5) est réalisé sous la forme d'un capillaire élastique composé de matière plastique, dans lequel le capillaire élastique est compris par un tuyau flexible de gaz de protection (19) pour réaliser la barrière aux gaz extérieurs (7) et un espace intermédiaire (20) pouvant être traversé par un flux d'un gaz de protection (21) sans gaz de test est prévu entre le tuyau flexible de gaz de protection (19) et le capillaire élastique ; et des moyens pour soumettre l'espace intermédiaire (20) à l'action du gaz de protection (21) sans gaz de test.

2. Dispositif de recherche de fuites selon la revendication 1, **caractérisé en ce que** la sonde de reniflage présente une embouchure d'aspiration (11) pour relier la sonde de reniflage au système chercheur de fuites (6), dans lequel une pompe de refoulement (33) est raccordée à l'embouchure d'aspiration (11) afin de refouler du gaz de mesure (3) par l'intermédiaire du conduit de reniflage (5) avec la barrière aux gaz extérieurs (7), dans lequel une résistance (34) hydraulique est introduite dans l'embouchure d'aspiration (11) entre l'emplacement de raccordement de la pompe de refoulement (33) et une extrémité, tournée vers le système chercheur de fuites (6), de l'embouchure d'aspiration (11), de sorte que lors du fonctionnement de la pompe de refoulement (33), une partie du gaz de mesure (3) refoulé afflue dans le système chercheur de fuites (6) par l'intermédiaire de la résistance (34) hydraulique et une partie du gaz de mesure (3) refoulé est évacuée dans l'environnement extérieur par l'intermédiaire de la pompe de refoulement (33).

3. Dispositif de recherche de fuites selon l'une quelconque des revendications 1 et 2, **caractérisé en ce qu'**une soupape à 2 voies (26) est disposée dans la zone d'aspiration du conduit de reniflage (5), à l'aide de laquelle un flux volumique de gaz de mesure (3) refoulé par l'intermédiaire du conduit de reniflage (5) vers le système chercheur de fuites peut être interrompu.

4. Dispositif de recherche de fuites selon l'une quelconque des revendications 1 à 3,
**caractérisé en ce qu'**une soupape à 3 voies (28) est disposée dans la zone d'aspiration du conduit de reniflage (5), à l'aide de laquelle le flux volumique de gaz de mesure (3) refoulé par l'intermédiaire du conduit de reniflage (5) vers le système chercheur de fuites (6) est interrompu et, simultanément, un gaz de protection sans gaz de test peut être acheminé dans le conduit de reniflage (5) afin de refouler le gaz de protection sans gaz de test à la place du gaz de mesure (3) vers le système chercheur de fuites (6).

5. Dispositif de recherche de fuites selon la revendication 4, **caractérisé par** un conduit d'alimentation en gaz (29) séparé, qui est raccordé à la soupape à 3 voies et par l'intermédiaire duquel un gaz de protection (21) sans gaz de test peut être amené à la soupape à 3 voies.

6. Dispositif de recherche de fuites selon la revendication 4, **caractérisé en ce qu'**un raccord de la soupape à 3 voies (28) est relié de manière fluidique à l'espace intermédiaire (20) de sorte que du gaz sans gaz de test peut s'écouler vers la soupape à 3 voies (28) en passant par l'espace intermédiaire (20) de la sonde de reniflage (1).

7. Dispositif de recherche de fuites selon l'une quelconque des revendications précédentes, **caractérisé en ce que** la barrière aux gaz extérieurs s'étend jusque dans le système chercheur de fuites (6) et empêche que des gaz provenant de l'atmosphère (8) puissent pénétrer dans le gaz de mesure (3) refoulé vers le système chercheur de fuites (6) par l'intermédiaire d'un conduit de reniflage s'étendant entre une tubulure d'aspiration et une pompe de refoulement (12) du système chercheur de fuites (6).

8. Dispositif de recherche de fuites selon l'une quelconque des revendications précédentes, **caractérisé par** une unité d'alimentation en gaz (23) pour fournir un gaz de protection (21) sans gaz de test, au moyen de laquelle le gaz de protection (21) sans gaz de test peut être acheminé dans un boîtier (30) du système chercheur de fuites (6), dans lequel le gaz de protection (21) acheminé dans le boîtier (30)
a) peut être amené à une embouchure d'aspiration (11), reliée à la tubulure d'aspiration, de la sonde de reniflage (1) par l'intermédiaire d'une tubulure d'aspiration du système chercheur de fuites (6) ; ou
b) peut être amené à une embouchure d'aspiration (11), reliée au système chercheur de fuites (6), du conduit de reniflage par l'intermédiaire d'un conduit de liaison entre le boîtier (30) du système chercheur de fuites (6) et la sonde de reniflage (1).

9. Dispositif de recherche de fuites selon l'une quelconque des revendications précédentes, **caractérisé par** une unité d'alimentation en gaz (23) pour fournir du gaz de protection (21) sans gaz de test, avec lequel la barrière aux gaz extérieurs (7) de la sonde de reniflage est formée,
a) dans lequel les impuretés du gaz de test (16) sont 100 fois moins importantes dans le gaz de protection (21) sans gaz de test que dans l'atmosphère ; et/ou
b) dans lequel les impuretés d'hélium dans le gaz de protection (21) sans gaz de test s'élèvent à 10 ppt (parts par trillion) au maximum ; et/ou
c) dans lequel l'unité d'alimentation en gaz (23) est réalisée afin de soumettre l'espace intermédiaire (20) à l'action du gaz de protection (21) sans gaz de test de sorte qu'une surpression allant de 5 hPa à 30 hPa par rapport à l'environnement est maintenue dans l'espace intermédiaire (20) entre le conduit de reniflage (5) et le tuyau flexible de gaz de protection (19) ; et/ou
d) dans lequel une pièce à main (13) de la sonde de reniflage présente une ouverture, par l'intermédiaire de laquelle un flux de gaz de protection (21) sans gaz de test sort de l'espace intermédiaire (20) dans l'atmosphère.
